# EUROPEAN PATENT APPLICATION

(11) **EP 4 310 322 A1**
(43) Date of publication of application: **24.01.2024**
(21) Application number: 22185948.1
(22) Date of filing: 20.07.2022
(51) Int. Cl.: F03D 7/02, B63B 39/00, B63B 35/44

(54) **A METHOD AND A SYSTEM FOR CONTROLLING A FLOATING WIND TURBINE**

(71) Applicant: Siemens Gamesa Renewable Energy A/S, 7330 Brande (DK)
(72) Inventor: Cavichioli Gonzaga, Carlos Alberto, 7100 Vejle (DK); Jensen, Dennis Stachniuk, 7330 Brande (DK); Laugesen, Kasper, 6700 Esbjerg (DK)
(74) Representative: SGRE-Association

(57) **Abstract**

The present invention relates to a method for controlling a floating wind turbine (10), comprising the steps of establishing steady-state inclination values regarding an inclination of the wind turbine (10) by means of an inclination value establishing device (11), calculating an average inclination value based on at least part of the established steady-state inclination values by means of a calculation device (12), performing a steady-state comparison between the average inclination value and a predetermined steady-state reference inclination value by means of a comparison device (13), and initiating steady-state measures based on the comparison between the average inclination value and the predetermined steady-state reference inclination value by means of an initiation device (14). The invention further relates to a system (100) and a computer program product (17) for carrying out the inventive method as well as a computer-readable storage medium (18) having stored the inventive computer program product (17) thereon.

## Description

### Field of the invention

The present invention relates to a method and a system for controlling a floating wind turbine. The invention further relates to a computer program product for controlling a floating wind turbine and a computer-readable storage medium having stored thereon such a computer program product.

### Art Background

In prior art, there are different kinds of wind turbines. In general, wind turbines are provided as onshore wind turbines or offshore wind turbines. Recently, floating offshore wind turbines are developed. Floating offshore wind turbines are complex systems with multiple variables and multiple degrees of freedom. Wind, wave and current loadings, which all are irregular by nature along with aerodynamical, structural and hydrodynamical couplings, as well as control actuations, all contribute to a complex dynamical behavior. In order to avoid dangerous and/or damaging situations for the environment of the wind turbine as well as the wind turbine itself, the operation and movements of the wind turbine are monitored. In case it is determined, for example, measured and monitored inclination values of an inclination of the wind turbine are too high, a control system will be activated in order to prevent overloading and/or capsizing of the wind turbine.

In the European patent application EP 2882960 A1, a floating wind turbine safety system is described in which fore-aft and side-side inclination values are measured by means of acceleration sensors and inclination sensors. In case a measured inclination value exceeds a predetermined threshold, countermeasures will be initiated in order to keep the operation of the wind turbine running and/or in order to prevent damages to the wind turbine.

### Summary of the Invention

It is an object of the present invention to provide a method and a system for an improved way of monitoring and/or controlling the operation of a floating wind turbine. This object is achieved by the subject-matters of the claims. In particular, the object is achieved by a method according to claim 1, a system according to claim 12, a computer program product according to claim 14 and a computer-readable storage medium according to claim 15 of the present application. Further features and details of the invention can be drawn from the dependent claims, the description, and the figures. Features and details discussed with respect to the inventive method are also correlated with the inventive system, the inventive computer program product, the inventive computer-readable storage medium and the other way around.

According to the present invention, a method is proposed for controlling a floating wind turbine, comprising the steps of:
- establishing steady-state inclination values regarding an inclination of the wind turbine by means of an inclination value establishing device,
- calculating an average inclination value based on at least part of the established steady-state inclination values by means of a calculation device,
- performing a steady-state comparison between the average inclination value and a predetermined steady-state reference inclination value by means of a comparison device, and
- initiating steady-state measures based on the comparison between the average inclination value and the predetermined steady-state reference inclination value by means of an initiation device.

Within the framework of the present invention, it was identified that just comparing inclination values directly to reference inclination values will not provide the desired meaningful results referring to the operation status of the wind turbine. By comparing steady-state inclination values with the average inclination value, an improved controlling and/or monitoring of the wind turbine can be provided. The wind turbine is preferably configured as a floating offshore wind turbine and will be mostly referred to as a wind turbine in the following, in order to avoid unnecessary long terms.

Comparing an established inclination value with a predetermined threshold and/or a predetermined reference value may help in identifying excessive inclinations, which ought to be prevented. In order to prevent an unwanted high number of alarms due to measured inclination values being higher than the predetermined reference value, for example due to strong winds and/or high waves in a relatively short time, it would be important to set the reference value not too low. However, having a relatively high reference value and/or upper threshold which allows relatively high deviations from actually desired inclination values, low inclination values and/or little deviations from the actual desired inclination values will not be taken into account.

By calculating an average inclination value based on established steady-state inclination values and initiating steady-state measures based on the inventive comparison between the average inclination value and the predetermined steady-state reference inclination value, a relatively low steady-state reference inclination value can be chosen. Even so, by calculating and using the average inclination value for the comparison, a high number of unintentional steady-state measures, for example an alarm, due to measured high inclination values, can be prevented. The measures can be understood as countermeasures and/or actions initiated in order to cope with a certain comparison result and the corresponding operation status of the wind turbine. For example, when the wind turbine is hit by a set of high waves resulting in a high inclination but five minutes later, there is no high inclination anymore, the average inclination value based on steady-state inclination values established in a time interval of 20 minutes will be low enough to prevent an unintended alarm.

Moreover, establishing steady-state inclination values over weeks, months or even years and having these values as a basis for calculating the average inclination values, even little undesired long-term deviations from correspondingly predetermined steady-state reference inclination values can be identified. In other words, by means of the inventive method, an undesired inclination trend can be identified over a relatively long period of time.

Hence, by means of the present method, the risk of capsizing and structural overloading during operation of floating offshore wind turbines and windfarms with a plurality of these wind turbines can be reliably prevented while also preventing undesired false alarms and indications for performing protection measures, respectively. Consequently, the availability of the wind turbine can be improved by scheduling preventive maintenance in case an undesired trend is identified, while unnecessary maintenance efforts can be prevented.

The inventive method is preferably provided for controlling and/or monitoring a floating wind turbine and/or operation of a floating wind turbine by data communication between a wind turbine based data communication device and/or data transmission device and a land based data communication device and/or data receiving device. Controlling the wind turbine can be understood as initiating measures for controlling the wind turbine. That is, controlling the wind turbine is not restricted to actively and/or directly controlling the wind turbine. In this respect, the method may comprise sending the established steady-state inclination values and/or the calculated average inclination values by the wind turbine based data communication device to the land based data communication device and/or to a cloud based data communication device, at least part of which might also be land based. The steady-state comparison may be performed by a wind turbine based comparison device, by a land based comparison device and/or by a cloud based comparison device. When initiating the steady-state measures, a sequence of measures may be performed to reduce loads in the wind turbine in heavy conditions, that is, for example, when the average inclination value is higher than the predetermined reference steady-state inclination value. The sequence of measures may be a predetermined sequence of measures depending on the comparison. Performing the steady-state comparison can be understood as performing the steady-state comparison in order to achieve a corresponding comparison result, wherein the steady-state measures may be initiated based on the comparison result. For example, predetermined steady-state measures may be initiated depending on whether the comparison result indicates that the average inclination value is higher than the predetermined steady-state reference inclination value, whether the comparison result indicates that the average inclination value is higher to a certain degree than the predetermined steady-state reference inclination value and/or whether the comparison result indicates that a plurality of average inclination values is a predetermined number of occurrences higher than the predetermined steady-state reference inclination value.

The steady-state inclination values can be established by means of a floater motion monitor. That is, the inclination value establishing device may comprise a floater motion monitor. The inclination value establishing device and/or the floater motion monitor may comprise at least one inclinometer, preferably in at least two directions, for obtaining the steady-state inclination values regarding a fore-aft and/or side-side inclination of the wind turbine and the tower of the wind turbine, respectively. The inclination value establishing device may additionally or alternatively a calculation unit for establishing the inclination values by means of an algorithm, for example.

The steady-state inclination values can be established over time by measuring inclination at a tower top and/or tower bottom in roll and/or pitch directions, and/or by estimating or indirectly obtaining the inclination based on a combination of different quantities. For example, at least one of the following quantities and/or values may be established, measured and/or calculated in order to establish the steady-state inclination values: blades flapwise and/or edgewise moment quantities, wind speed quantities, wind direction quantities, nacelle acceleration and/or velocities quantities, thrust force quantities.

The steady-state inclination value may be understood as a resulting steady-state inclination value resulting from a pitch-movement and/or a roll-movement of the wind turbine and the wind turbine tower, respectively. Thus, establishing steady-state inclination values may also be understood as or include establishing steady-state roll-movement and/or steady-state pitch-movement of the wind turbine. The steady-state inclination values may be preferably established as steady-state inclination angles. The resulting steady-state inclination value may be established, for example, by means of sequential hypothesis testing, online cumsum and/or any other change point detection algorithm. By taking resulting inclination values into account, that is, not only values based on which the inclination values can be calculated, excessive inclination of the wind turbine can be avoided regardless the direction of the inclination.

The average inclination value can be calculated by averaging at least two of the established steady-state inclination values and/or by calculating a standard deviation of at least part of the established steady-state inclination values. For example, the average inclination value can be calculated by averaging at least two established steady-state inclination values, which have been established at two different times, like minutes, hours, days, weeks, months or even years separate from each other.

The inclination value establishing device may comprise at least one sensor, a controller, a computer and/or at least part of the computer for establishing the steady-state inclination values. The calculation device may comprise a computer or at least part of the computer for calculating the average inclination value. The comparison device may comprise a computer or at least part of the computer for performing the steady-state comparison between the average inclination value and the predetermined steady-state reference inclination value. The initiation device may comprise at least one actuator, a controller, a computer and/or part of the computer for initiating the steady-state measures.

In a further embodiment of the present invention, it is possible that the steady-state comparison is performed between the average inclination value and at least one predetermined steady-state reference inclination value by means of the comparison device, wherein at least one of the following steady-state measures is initiated by means of the initiation device depending on the steady-state comparison:
- generating a warning signal and outputting the warning signal into the environment of the wind turbine by means of a warning device,
- initiating a curtailed operation mode of the wind turbine with reduced power and/or reduced rotor speed by means of a protection device,
- initiating a restricted operation mode of the wind turbine, in which enhancing of power and/or rotor speed is prohibited by means of the protection device,
- initiating a blade pitch angle adjusting mode of the wind turbine, in which a blade pitch angle of at least one blade of the wind turbine is changed by means of the protection device,
- initiating an idle operation mode of the wind turbine by means of the protection device,
- initiating a stop operation mode of the wind turbine in order to stop operation of the wind turbine by means of the protection device.

Applying the above described method, a sequence of decisions can be provided leading to reduced inclination and/or reduced risk of damages to the wind turbine while still keeping the turbine producing power and, as a last resort, request a stop. The generated and output warning signal can be received by a land based signal receiver in order to initiate the desired measure. The desired measure can be performed as displaying a corresponding warning and/or alarm on a display unit to a land based person and/or initiating actual countermeasures in order to change the present operation mode of the wind turbine. The described comparison can be understood as a comparison comprising one or a plurality of different comparison steps. The warning device may comprise different separate warning means like a display unit and/or a sound generating unit in order to generate an acoustic warning signal, a visual warning signal and/or a respective alarm.

The protection device may comprise at least one actuator, a controller, a computer and/or part of the computer for initiation the respective operation modes in order to prevent damage to the wind turbine and/or in order to keep the operation of the wind turbine running. In the curtailed operation mode, the turbine will still be producing less power than in an uprated power mode, in which the wind turbine can be operated.

The restricted operation mode may also be understood such that the wind turbine is prohibited to increasing generated power, rotational speed, and/or torque. Additionally or alternatively the restricted operation mode can be understood as a normal operation or rated operation mode, in which, however, a so called power boost operation mode is prohibited.

In the blade pitch angle adjusting mode, blade pitch offsets of at least one blade of the wind turbine can be increased after and/or during at least one of the curtailed operation modes to reduce the average tilt and/or yaw-moments and/or steady-state inclinations.

The idle operation mode can be understood as an operation mode in which the turbine is stopped until automatically resuming the operation after the stop is finished. The stop operation mode can be understood as an operation mode in which the turbine is stopped, resuming operation is forbidden and an inspection is requested. The idle operation mode does not necessarily require stopping the rotation of the rotor of the wind turbine, but at least power generation/energy generation and/or feeding generated electrical energy into a grid has ceased and/or is stopped.

In the stop operation mode, the turbine may be idling sometimes in order to prevent damages, which may result from a stopped state for a long period without any rotational motion of the rotor.

Optionally and/or additionally, the wind turbine can be configured such that it can be operated in a rated operation mode or in a power boost operation mode or uprated power mode. Rated mode means in this context that the wind turbine can operated up to a rated power threshold, a rated rotational speed threshold, and/or a rated torque, in particular for keeping loads of components of the wind turbine under specific rated load thresholds. Further in particular, such rated load thresholds are connected to the rated operation mode such that when operating the wind turbine in the rated operation mode such rated load thresholds are never exceeded or are only exceeded in transient and/or exceptional events. Further in particular, the power boost operation mode means that the wind turbine can be operated exceeding the rated power threshold, exceeding rated rotational speed, and/or exceeding rated torque. Possibly, during power boost operation mode, the rotational speed does not exceed a power boost rotational threshold, the generated power does not exceed a power boost power threshold, and/or the talk does not exceed a power boost torque threshold.

That means, the restricted operation mode may include, that the wind turbine is always operated in rated operation mode and may not exceed into power boost operation mode. Possibly, curtailed operation mode refers to an active reduction of generated power, of rotational speed, and/or of torque. In particular, the curtailed operation mode may be initiated when the wind turbine is in rated operation mode or in power boost operation mode (up rated power mode). According to an embodiment the term "curtailed operation mode" refers only to the rated operation mode.

According to a further embodiment of the present invention, it is possible that the steady-state comparison is performed between the average inclination value and a predetermined first steady-state reference inclination value by means of the comparison device, wherein at least one of the following steady-state measures is initiated by means of the initiation device when the average inclination value is higher than the pre-determined first steady-state reference inclination value:
- generating a first warning signal and outputting the first warning signal into the environment of the wind turbine by means of a warning device,
- initiating a curtailed operation mode of the wind turbine with reduced power and/or reduced rotor speed by means of a protection device, and/or
- initiating a restricted operation mode of the wind turbine (10), in which enhancing of power and/or rotor speed is prohibited by means of the protection device.

When performing this method, measures may be applied for preventing damage to the wind turbine while it is still tried to keep the operation of the wind turbine running. Reduced power and/or reducing power can be understood such that the wind turbine will be controlled to reduce the maximum possible power output of the wind turbine. Reduced and/or reducing rotor speed can be understood such that the wind turbine will be controlled to reduce the maximum possible speed of the rotor blades and the rotor, respectively. The first steady-state reference inclination value can be understood as a first accepted threshold.

In accordance with the inventive method, it is further possible that the steady-state comparison is performed between the average inclination value and a predetermined second steady-state reference inclination value, which is higher than the first steady-state reference inclination value, by means of the comparison device, wherein at least one of the following steady-state measures is initiated by means of the initiation device when the average inclination value is higher than the predetermined second steady-state reference inclination value:
- generating a second warning signal, which differs from the first warning signal, and outputting the second warning signal into the environment of the wind turbine by means of the warning device, and/or
- initiating an idle operation mode of the wind turbine by means of the protection device.

When performing this method, further and/or additional measures may be applied for preventing damage to the wind turbine while it is still tried to keep the operation of the wind turbine running. For example, when the average inclination value is higher than the predetermined second steady-state reference inclination value and thus also higher than the first steady-state reference inclination value, initiating the above described curtailed operation mode and/or the restricted operation mode will not be enough for protecting the wind turbine, which is why the idle operation mode of the wind turbine may be initiated.

Furthermore, when performing the inventive method, the steady-state comparison may be performed between the average inclination value and a predetermined third steady-state reference inclination value, which is higher than the second steady-state reference inclination value, by means of the comparison device, wherein at least one of the following steady-state measures is initiated by means of the initiation device when the average inclination value is higher than the predetermined third steady-state reference inclination value:
- generating a third warning signal, which differs from the first warning signal and the second warning signal, and outputting the third warning signal into the environment of the wind turbine by means of the warning device, and/or
- initiating a stop operation mode of the wind turbine in order to stop operation of the wind turbine by means of the protection device.

When performing this method, further and/or additional measures may be applied for preventing damage to the wind turbine. For example, when the average inclination value is higher than the predetermined third steady-state reference inclination value and thus also higher than the second steady-state reference inclination value and the first steady-state reference inclination value, initiating the above described curtailed operation mode and/or the restricted operation mode might not be enough for protecting the wind turbine, which is why the stop operation mode of the wind turbine is initiated. Initiating the stop operation mode means that the wind turbine will be controlled such that a normal operation, during which the rotor blades move for power production, will not be possible anymore.

In addition, the steady-state comparison may be performed multiple times between the average inclination value and a fourth predetermined steady-state reference inclination value by means of the comparison device over time, wherein at least one of the following steady-state measures is initiated by means of the initiation device when the average inclination value differs a predetermined number of occurrences from the predetermined steady-state reference inclination value by a predetermined difference value:
- generating a fourth warning signal and outputting the fourth warning signal into the environment of the wind turbine by means of a warning device,
- generating a service request and outputting the service request into the environment of the wind turbine by means of the warning device, and/or
- initiating a stop operation mode of the wind turbine in order to stop operation of the wind turbine by means of a protection device.

Performing the steady-state comparison multiple times between the average inclination value and the fourth predetermined steady-state reference inclination value may be understood as performing the steady-state comparison multiple times between the average inclination value and the fourth predetermined steady-state reference inclination value, wherein the average inclination value may be calculated based on different established steady-state inclination values and/or steady-state inclination values established at different times. In other words, the steady-state comparison can be performed multiple times between different average inclination values and the fourth predetermined steady-state reference inclination value.

According to this embodiment, further and/or additional measures may be applied for preventing damage to the wind turbine. For example, when the average inclination value is repeatedly higher than the predetermined fourth steady-state reference inclination value during a plurality of comparisons and thus repeatedly higher than the second steady-state reference inclination value and the first steady-state reference inclination value, initiating the above described stop operation mode of the wind turbine might not be enough. Therefore, in the above described case, an alarm can be raised to report, for example, "Turbine stopped and waiting for immediate service due to excessive number of high steady-state inclination events".

Taking the above possible embodiments into account, a method as exemplarily explained in the following can be provided. In a first step, steady-state inclination values will be established. In a further step, at least one average steady-state inclination value is calculated based on established steady-state inclination values. In a further step, at least one steady-state comparison can be performed between the at least one average inclination value and at least one predetermined steady-state reference inclination value. The comparison can be understood as monitoring the established steady-state-inclination values in order to detect, whether established steady-state inclination values and/or angles are too high and higher than the at least one steady-state reference inclination value. On the above described basis, an algorithm can be performed as follows:
1) IF at least one average steady-state inclination value is higher than a first steady-state reference inclination value AND uprated power and speed conditions of the wind turbine are enabled
   i. disable the uprated power and speed conditions of the wind turbine
   ii. generate a first warning signal and output the first warning signal into the environment of the wind turbine, for example "uprated power and speed conditions disabled due to a high average steady-state inclination value"
2) ELSEIF at least one average steady-state inclination value is higher than a second steady-state reference inclination value AND uprated power and speed conditions of the wind turbine are disabled
   i. generate a second warning signal different from the first warning signal and output the second warning signal into the environment of the wind turbine, for example "curtailed operation due to high steady-state inclination" or "restricted operation due to high steady-state-inclination"
   ii. initiate a curtailed operation mode or a restricted operation mode
3) ELSEIF at least one average steady-state inclination value is higher than a third steady-state reference inclination value AND uprated power and speed conditions of the wind turbine are disabled AND the wind turbine is operated in a reduced power and speed operation mode
   i. generate a third warning signal different from the first warning signal and the second warning signal and output the third warning signal into the environment of the wind turbine, for example "wind turbine idling due to a high average steady-state inclination value"
   ii. initiate an idle operation mode of the wind turbine
4) ELSEIF average steady-state inclination values are repeatedly, in particular a predetermined number of occurrences, higher than a fourth steady-state reference inclination value AND uprated power and speed conditions of the wind turbine are disabled AND the wind turbine is operated in a reduced power and speed operation mode
   i. generate a fourth warning signal different from the first warning signal, the second warning signal and the third warning signal and output the fourth warning signal into the environment of the wind turbine, for example "wind turbine stopped and waiting for service due to excessive number of high average steady-state inclination values"
   ii. initiate a stop operation mode of the wind turbine
5) ELSEIF every steady-state inclination value is lower than the first steady-state reference inclination value
   i. start wind turbine if operated in stop operation mode and terminate outputting warning signals
   ii. terminate curtailed and/or restricted operation mode if wind turbine is
      operated in curtailed and/or restricted operation mode
   iii. enable uprated power and speed conditions of the wind turbine
6) ENDIF
7) Return to 1)

In the above exemplary method, the second steady-state reference inclination value is higher than the first steady-state reference inclination value, the third steady-state reference inclination value is higher than the second steady-state reference inclination value and the fourth steady-state reference inclination value is higher than the third steady-state reference inclination value. The phrase "uprated power and speed conditions of the wind turbine are enabled" can be understood such that uprated power and speed conditions, a so called powerboost mode, is possible and/or allowed, for example, by a controller for controlling the operation modes of the wind turbine. Generating a warning signal can be understood as generating at least one warning signal and/or at least one alarm, preferably visually and/or acoustically. The terms "first", "second", "third" and "fourth" with respect to the warning signals are meant for an easy way of distinguishing the different warning signals. In another example of the inventive method, not all of the warning signals are necessary, which is why the fourth warning signal may, for example, also be a second warning signal.

According to a further embodiment of the present invention, it is possible that the average inclination value is calculated based on steady-state inclination values established on different days. Applying this method, long term changes and/or an undesired trend regarding the inclination values can be identified in a reliable and easy manner. In this respect, it is further possible that at least one average inclination value is calculated based on steady-state inclination values established in different weeks, different months and/or even different years. For example, the average inclination value is calculated based on a steady-state inclination value established on Monday and a steady-state inclination value established on Tuesday, in the same week or in different weeks, months or years. As a matter of course, each average inclination value may also be calculated based on more than two steady-state inclination values.

The average inclination value and/or the at least one average inclination value may also be continuously calculated over days and correspondingly used for a continuously performed steady-state comparison between the average inclination value and a predetermined steady-state reference inclination value. That is, the average inclination value will be continuously adapted with every additionally established steady-state inclination value. This may also form the basis for an easy and still reliable way of identifying trends regarding undesired long term changes in the steady-state inclination of the wind turbine and the corresponding undesired operation mode and/or movement of the wind turbine, respectively.

Moreover, an inventive method may comprise the following steps:
- establishing at least one instantaneous inclination value regarding an inclination of the wind turbine by means of the inclination value establishing device,
- performing an instantaneous comparison between the at least one instantaneous inclination value and a predetermined instantaneous reference inclination value by means of the comparison device, wherein the predetermined instantaneous reference inclination value is higher than the steady-state reference inclination value,
- initiating instantaneous measures based on the instantaneous comparison between the at least one instantaneous inclination value and the predetermined instantaneous reference inclination value by means of the initiation device.

By distinguishing between a steady-state inclination value and an instantaneous inclination value, which may arise as consequence of different root-causes, measures and/or countermeasures for presenting damage to the wind turbine as well as suitable warning signals can be provided in an even more valid way. For example, different signal processing operations, different monitoring techniques and/or different algorithms, possibly applied in different time scales, can be used depending on whether steady-state inclination values or instantaneous inclination values shall be taken into account and/or processed. Consequently, the operation of the wind turbine can be even better controlled and/or monitored. By the proposed method, controlling the wind turbine does not solely rely on values established by an accelerometer and/or an inclinometer. Steady-state inclination values can be established based on mean wind speed values (thrust force), wave values (second order hydrodynamic forces) that lead to a floater static offset, ocean current values, permanent eccentric center of gravity values, and/or temporary eccentric center of gravity values due to a ballast tank leakage, a compartment leakage and/or a mooring system failure. The mentioned values may be established by a correspondingly configured inclination value establishing device comprising, for example, suitable sensors and a calculation device. Instantaneous inclination values can be established based on motion values of at least one floater in roll and pitch due to wind turbulence, floater natural motion, induced motion due to first and second order hydrodynamic wave forces and/or resonance of vibrational modes. Hence, steady-state inclination values may be established in a different way and/or on different base values than the at least one instantaneous inclination value.

Taking the above possible embodiments into account, a method as exemplarily explained in the following can be provided. In the first step (in addition to the estimation of the steady-state inclination values), at least one instantaneous inclination value is established. In a further step, an instantaneous comparison is performed between the at least one instantaneous inclination value and a predetermined instantaneous reference inclination value, wherein the predetermined instantaneous reference inclination value is higher than the predetermined steady-state reference inclination value. On the above described basis, an additional algorithm or additional parts of a common algorithm with specific regard to the established at least one instantaneous inclination value and/or the corresponding comparison can be performed as follows:
1) IF at least one instantaneous inclination value is higher than a first instantaneous reference inclination value AND uprated power and speed conditions of the wind turbine are enabled
   i. disable the uprated power and speed conditions of the wind turbine
   ii. generate a first warning signal and output the first warning signal into the environment of the wind turbine, for example "uprated power and speed conditions disabled due to a high instantaneous inclination value"
2) ELSEIF at least one instantaneous inclination value is higher than a second instantaneous reference inclination value AND uprated power and speed conditions of the wind turbine are disabled
   i. generate a second warning signal different from the first warning signal and output the second warning signal into the environment of the wind turbine, for example "curtailed operation due to high instantaneous inclination" and/or "restricted operation due to high instantaneous inclination"
   ii. initiate a curtailed operation mode and/or a restricted operation mode
3) ELSEIF at least one instantaneous inclination value is higher than a third instantaneous reference inclination value AND uprated power and speed conditions of the wind turbine are disabled AND the wind turbine is operated in a reduced power and speed operation mode
   i. generate a third warning signal different from the first warning signal and the second warning signal and output the third warning signal into the environment of the wind turbine, for example "wind turbine idling due to a high instantaneous inclination value"
   ii. initiate an idle operation mode of the wind turbine
4) ELSEIF instantaneous inclination values are repeatedly, in particular a predetermined number of occurrences, higher than a fourth instantaneous reference inclination value AND uprated power and speed conditions of the wind turbine are disabled AND the wind turbine is operated in a reduced power and speed operation mode
   i. generate a fourth warning signal different from the first warning signal, the second warning signal and the third warning signal and output the fourth warning signal into the environment of the wind turbine, for example "wind turbine stopped and waiting for service due to excessive number of high instantaneous inclination values"
   ii. initiate a stop operation mode of the wind turbine
5) ELSEIF the at least one instantaneous inclination value is lower than the first instantaneous reference inclination value
   i. start wind turbine if operated in stop operation mode and terminate outputting warning signals and return to start
   ii. terminate curtailed operation mode and/or restricted operation mode if wind turbine is operated in curtailed
      operation mode and return to start
   iii. enable uprated power and speed conditions of the wind turbine and return to start
6) ENDIF
7) Return to 1)

In the above exemplary method, the second instantaneous reference inclination value is higher than the first instantaneous reference inclination value, the third instantaneous reference inclination value is higher than the second instantaneous reference inclination value and the fourth instantaneous reference inclination value is higher than the third instantaneous reference inclination value.

When carrying out the inventive method, it is further possible that the instantaneous comparison is performed between the at least one instantaneous inclination value and the predetermined instantaneous reference inclination value by means of the comparison device, wherein at least one of the following instantaneous measures is initiated by means of the initiation device depending on the instantaneous comparison:
- generating a warning signal and outputting the warning signal into the environment of the wind turbine by means of the warning device,
- initiating a curtailed operation mode of the wind turbine with reduced power and/or reduced rotor speed by means of the protection device,
- initiating a restricted operation mode of the wind turbine, in which enhancing of power and/or rotor speed is prohibited by means of the protection device,
- initiating a blade pitch angle adjusting mode of the wind turbine, in which a blade pitch angle of at least one blade of the wind turbine is changed by means of the protection device,
- initiating an idle operation mode of the wind turbine by means of the protection device,
- initiating a stop operation mode of the wind turbine in order to stop operation of the wind turbine by means of the protection device.

The above described sequence of decisions can thus be provided even more specific in order to reduce inclination of the wind turbine while still keeping the turbine producing power.

The blade pitch angle adjusting mode may be understood as or can comprise an active damper control authority operation mode of the wind turbine in which an instantaneous blade pitch angle of at least one blade of the wind turbine and/or a power reference is/are changed by means of the protection device in order to reduce floater pitch, roll and/or yaw motion inclination and/or angles, and/or related vibrations thereof, and/or amplitudes of related vibrations thereof. For example, by changing the power reference of a turbine the energy capture of the wind turbine can be increased while maintaining load and generator speed constraints; in the same way the energy capture of the wind turbine can be decreased while reducing loads.

According to a further embodiment of the present invention, it is possible that the at least one instantaneous inclination value is established by measuring at least one inclination value and filtering the at least one measured inclination value with at least one predetermined target frequency. This leads to more accurate inclination values making it possible to control the operation of the wind turbine even better. The at least one measured inclination value can be filtered multiple times and/or with different filter techniques like filtering with a target frequency of floater roll and pitch natural frequencies, filtering with a target frequency with a first tower bending natural frequency and/or filtering with a target frequency tracking the wave spectrum band.

A further aspect of the invention relates to a system for controlling a floating offshore wind turbine, comprising:
- an inclination value establishing device for establishing steady-state inclination values regarding an inclination of the wind turbine,
- a calculation device for calculating an average inclination value based on at least part of the established steady-state inclination values,
- a comparison device for performing a comparison between the average inclination value and a predetermined steady-state reference inclination value, and
- an initiation device for initiating steady-state measures based on the comparison between the average inclination value and the predetermined steady-state reference inclination value.

Therefore, the inventive system brings up the same advantages that have been discussed in detail with respect to the inventive method. The system may be configured and comprise further suitable means like sensors, actuators, a controller and/or a computer being configured to carry out any one of the above described methods. The system may comprise the wind turbine or parts of the wind turbine.

An additional aspect of the present invention relates to a computer program product comprising instructions to cause the above described system to carry out the inventive method. Furthermore, a computer-readable, preferably non-volatile, storage medium having stored thereon the computer program product, is provided. Hence, the inventive computer program product and the inventive computer-readable storage medium bring up the above described advantages as well.

The computer program product may be implemented as a computer-readable instruction code in any suitable programming language and/or machine language, such as JAVA, C++, C#, and/or Python. The computer program product may be stored on a computer-readable storage medium such as a data disk, a removable drive, volatile or non-volatile memory, or a built-in memory/processor. The instruction code may program a computer or other programmable devices such as a controller and/or computer in order to perform the desired functions. Further, the computer program product may be provided and/or be on a network, such as the internet, from which a user may download it as needed. The computer program product may be implemented by means of software, as well as by means of one or more special electronic circuits, that is, in hardware or in any hybrid form, that is, by means of software components and hardware components.

According to a further additional or alternative aspect of the invention a method for operating an offshore wind turbine system, in particular a floating offshore wind turbine system is disclosed. The method comprising:
controlling the floating offshore wind turbine system according to any one of the embodiments of the previously described.

In addition or alternatively, the method for operating an offshore wind turbine system may comprise:
generating, by the offshore wind turbine system, electrical power and/or electrical energy,
transmitting at least a part of the electrical power and/or of the electrical energy to an electrical receiving arrangement not positioned in international waters, in particular positioned on land, onshore; and
supplying at least a part of the electrical power and/or of the electrical energy to a utility grid, in particular onshore utility grid.

Further measures improving the inventive concept can be drawn from the following description of preferred embodiments, which are schematically shown in the drawings. The features and advantages, which can be drawn from the claims, from the description and from the drawings might be considered essential alone or in combination with each other, for example by integrating certain details or steps of the previously disclosed method into a computer program product, wherein the computer program product when executed on a computer is enabled to control the wind turbine system.

### Brief description of the drawings

The present invention is discussed in more detail with respect to the accompanying drawings, in which
- Fig. 1: shows a floating offshore wind turbine according to an exemplary embodiment of the present invention in a desired balanced state,
- Fig. 2: shows a floating offshore wind turbine according to an exemplary embodiment of the present invention in an undesired unbalanced state,
- Fig. 3: shows a block diagram in order to explain an inventive method according to an exemplary embodiment of the present invention, and
- Fig. 4: shows a block diagram in order to explain an inventive method according to a further exemplary embodiment of the present invention, and
- Fig. 5: shows a block diagram of a computer-readable storage medium .

### Detailed description of the drawings

Elements and features having the same function and operating principle are labeled with the same reference signs in the drawings. The illustrations in the drawings are schematic.

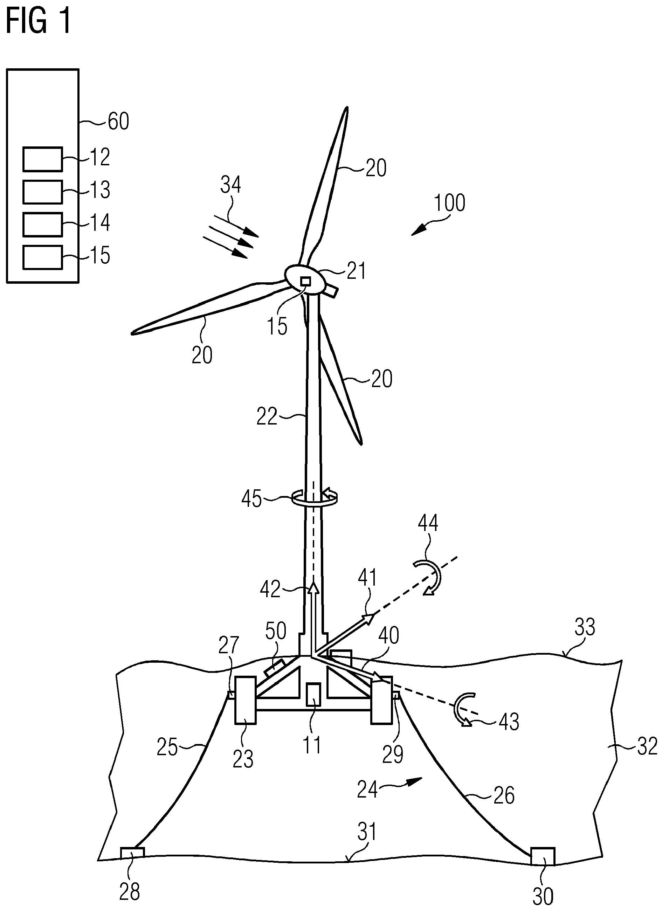

Fig. 1 shows a system 100 comprising a wind turbine 10 as a floating offshore wind turbine according to an exemplary embodiment in a desired balanced state, in which a resulting inclination of the wind turbine 10 is relatively low. The system 100 is configured for controlling the operation of the wind turbine 10 and in this respect monitoring the operation of the wind turbine 10. The wind turbine 10 comprises three blades 20 mounted to a nacelle 21, a tower 22 and a floating foundation 23. The wind turbine 10 further comprises a fixing structure 24 comprising a plurality of mooring lines 25, 26. Only a first mooring line 25 and a second mooring line 26 are shown in ig. 1 for clarity reasons. The first mooring line 25 is fixed to the floating foundation 23 by a first foundation mooring line fixation 27 and to a sea ground 31 by a first sea ground mooring line fixation 28. The second mooring line 26 is fixed to the floating foundation 23 by a second foundation mooring line fixation 29 and to the sea ground 31 by a second sea ground mooring line fixation 30. The floating foundation 23 is fixed by the first mooring line 25 and the second mooring line 26 in such a manner that the floating foundation 23 is dunked into sea water 32 under a sea surface 33.

An incoming wind field 34 acts on the three blades 20 of the wind turbine 10 such that electrical energy may be generated by the floating wind turbine 10. The wind turbine 10 floats in the sea water 32 and is held in position by the mooring lines 25, 26. The wind turbine 10 has six individual degrees of freedom in which the wind turbine 10 may move. Namely, three translations surge 40, sway 41 and heave 42, and three rotations roll 43, pitch 44 and yaw 45. Furthermore, the wind turbine 10 is stabilized by a stabilizing system 50 mounted to the floating foundation 23. In order to establish steady-state inclination values as well as instantaneous inclination values regarding an inclination of the wind turbine 10, the wind turbine 10 comprises an inclination value establishing device 11, which is schematically shown in a base portion of the wind turbine 10. The inclination value establishing device 11 may, however, comprise a plurality of parts like inclination sensors and acceleration sensors positioned separate from each other in different parts of the wind turbine 10.

The system 100 shown in Fig. 1 further comprises a land based controller 60 for controlling the floating wind turbine 10. The controller 60 comprises a calculation device 12 for calculating an average inclination value based on established steady-state inclination values, a comparison device 13 for performing a comparison between average inclination values and a predetermined steady-state reference inclination value, and an initiation device 14 for initiating steady-state measures based on the comparison between average inclination values and predetermined steady-state reference inclination values. The mentioned components of the controller 60 or parts of the components may also be provided in the wind turbine 10 and/or in a computer cloud environment.

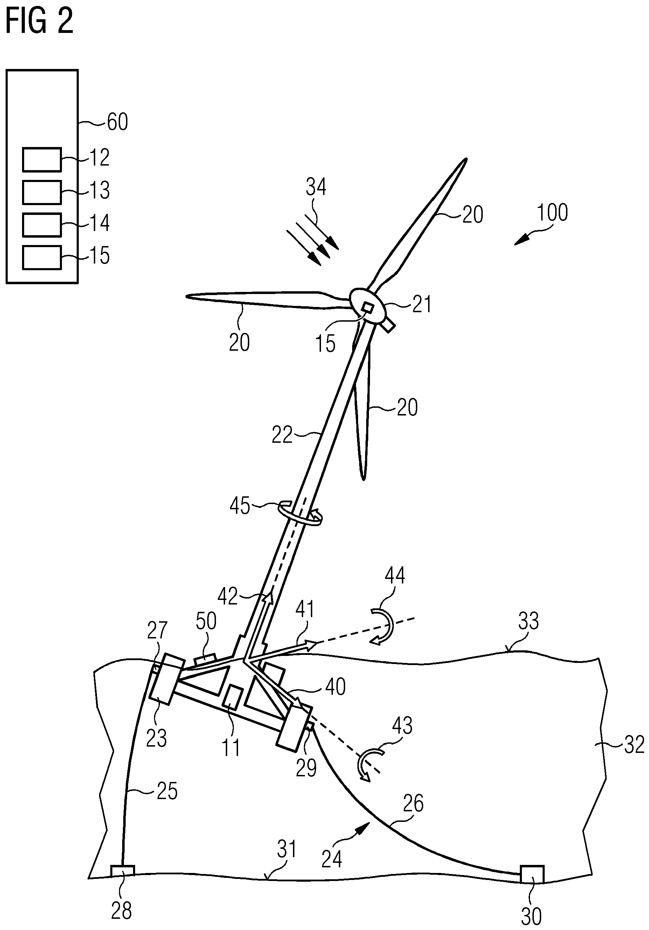

Fig. 2 shows a wind turbine 10 of Fig. 1 in an undesired unbalanced state, in which the wind field 34 causes a strong inclination of the wind turbine 10 and the tower 22, respectively.

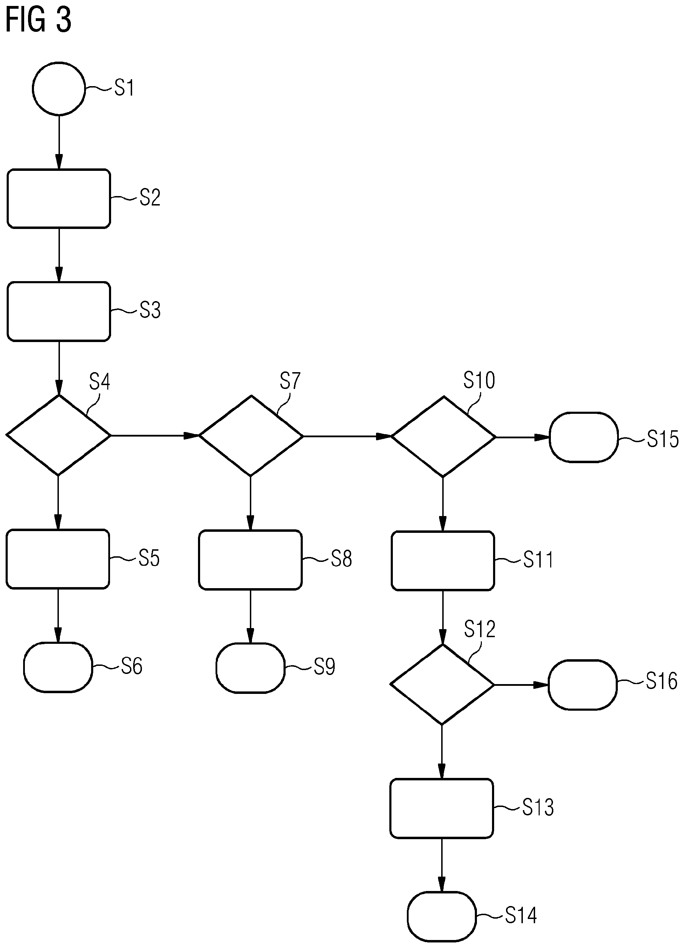

With regard to Fig. 1 and Fig. 3, a specific method for controlling the shown wind turbine 10 will be described. In a first step S1, values like blade edge and flapwise moments are measured. Based thereon, resulting steady-state inclination values are established at a given time instant in step S2. In step S3, an average inclination value is calculated over time based on established steady-state inclination values by means of the calculation device 12. In step S4, a steady-state comparison is performed between an average inclination value and a predetermined third steady-state reference inclination value, which is higher than a second steady-state reference inclination value, by means of the comparison device 13. When the average inclination value is higher than the predetermined third steady-state reference inclination value, a stop operation mode of the wind turbine 10 is initiated in step S5 in order to stop operation of the wind turbine by means of a protection device. The protection device (not shown) may comprise at least one actuator, a controller, a computer and/or part of the computer, being part of the wind turbine 10, and/or the land based controller 60, for initiating the respective operation modes in order to prevent damage to the wind turbine and/or in order to keep the operation of the wind turbine running. Thereafter, in step S6, a third warning signal, which differs from a first warning signal and a second warning signal, is generated and output into the environment of the wind turbine 10, in particular to the controller 60 of the system 100, by means of a warning signal transmission device of the warning device 15 located in the nacelle 21. Based on the output third warning signal, a third alarm is displayed on a land based display unit, "Wind turbine stopped due to high steady-state inclination. Inspection required". In case there are failures like a tendon failure, a mooring system failure and/or a compartment leakage in ballast tanks of the foundation 23, an inspection can be requested as soon as possible. As shown in Fig. 1 and Fig. 2, the warning device 15 may not only comprise land based components but also components based in the wind turbine 10. The warning device comprises a warning signal generating device (not shown), a warning signal transmission device in the nacelle 21 or in another part of the wind turbine 10, a warning signal receiving device in the land based controller 60 or in another land based location as well as a display device (not shown) for showing the alarm to a land based person and/or user based on the output warning signal.

When the average inclination value in step S4 is not higher than the predetermined third steady-state reference inclination value, the method continues to step S7, where a steady-state comparison is performed between an average inclination value and a predetermined second steady-state reference inclination value, which is higher than the first steady-state reference inclination value and lower than the third steady-state reference inclination value, by means of the comparison device 13. When the average inclination value is higher than the predetermined second steady-state reference inclination value, an idle operation mode of the wind turbine 10 is initiated by means of the protection device in step S8. Thereafter, in step S9, a second warning signal, which differs from the first warning signal and the third warning signal, is generated and transmitted to the controller 60 by means of the warning device 15 as a second alarm displaying, in a way as described above, "Wind turbine in idle operation mode due to high steady-state inclination". Alternatively, a stop operation may be initiated but without the request for inspection. That is, the idle operation and the stop operation may both be understood as a stop operation, wherein one comes with the request for inspection and the other does not before the wind turbine 10 is put back to normal operation.

When the average inclination value in step S7 is not higher than the predetermined second steady-state reference inclination value, the method continues to step S10, where a steady-state comparison is performed between an average inclination value and the predetermined first steady-state reference inclination value by means of the comparison device 13. When the average inclination value is higher than the predetermined second steady-state reference inclination value, a curtailed operation mode of the wind turbine 10 with reduced power and reduced rotor speed and/or a restricted operation mode of the wind turbine 10, in which enhancing of power and/or rotor speed is prohibited, is initiated by means of a protection device in step S11. Thereafter, in step S12, comparisons between the current rotor speed and power of the wind turbine 10 and corresponding predetermined reference values are performed. When the power of the wind turbine 10 and the rotor speed are below the predetermined reference values and/or minimum thresholds, an idle operation mode of the wind turbine 10 is initiated by means of the protection device in step S13. Thereafter, in step S14, the second warning signal is generated and transmitted to the controller 60 by means of the warning device 15 as a second alarm displaying, in a way as described above, "Wind turbine in idle operation mode due to high steady-state inclination".

In case the power of the wind turbine 10 and the rotor speed are not below the predetermined reference values and/or minimum thresholds, the method continues to step S16, where a first warning signal is generated and transmitted to the controller 60 by means of the warning device 15 as a first alarm displaying, in a way as described above, "Wind turbine in curtailed operation due to high steady-state inclination" and/or "Wind turbine in restricted operation due to high steady-state inclination". In case the result of step S10 is that the average inclination value is higher than the predetermined second steady-state reference inclination value, the method continues to step S15, where no further measures are initiated and it is waited for a further iteration of the method.

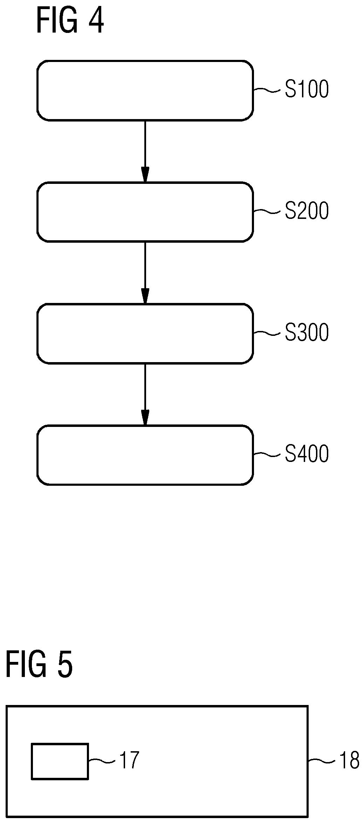

With regard to Fig. 4, a method for controlling the shown wind turbine 10 will be described. In a first step S100, steady-state inclination values regarding an inclination of the wind turbine 10 are established by means of the inclination value establishing device 11. Further, instantaneous inclination values regarding the inclination of the wind turbine 10 are established by means of the inclination value establishing device 11. In a second step S200, an average inclination value is calculated based on established steady-state inclination values by means of the calculation device 12. In a third step S300, a steady-state comparison between the average inclination value and a predetermined steady-state reference inclination value is performed by means of the comparison device 13. Further, an instantaneous comparison between the established instantaneous inclination values and a predetermined instantaneous reference inclination value is performed by means of the comparison device 13, wherein the predetermined instantaneous reference inclination value is higher than the predetermined steady-state reference inclination value. In a fourth step S400, steady-state measures are initiated or not based on the comparison between the average inclination value and the predetermined steady-state reference inclination value, and initiating instantaneous measures are initiated or not based on the instantaneous comparison between the instantaneous inclination values and the predetermined instantaneous reference inclination value by means of the initiation device 14.

The steady-state comparison is performed between the average inclination value and a predetermined steady-state reference inclination value by means of the comparison device 13, wherein at least one of the following steady-state measures is initiated (or not) by means of the initiation device 14, depending on the steady-state comparison:
- generating a warning signal and outputting the warning signal into the environment of the wind turbine 10 by means of a warning device 15,
- initiating a curtailed operation mode of the wind turbine 10 with reduced power and/or reduced rotor speed by means of a protection device,
- initiating a restricted operation mode of the wind turbine 10, in which enhancing of power and/or rotor speed is prohibited by means of the protection device,
- initiating a blade pitch angle adjusting mode of the wind turbine 10, in which a blade pitch angle of at least one blade 20 of the wind turbine 10 is changed by means of the protection device,
- initiating an idle operation mode of the wind turbine 10 by means of the protection device,
- initiating a stop operation mode of the wind turbine 10 in order to stop operation of the wind turbine by means of the protection device.

The instantaneous comparison is performed between the instantaneous inclination values and the predetermined instantaneous reference inclination value by means of the comparison device 13, wherein at least one of the following instantaneous measures is initiated (or not) by means of the initiation device 14, depending on the instantaneous comparison:
- generating a warning signal and outputting the warning signal into the environment of the wind turbine 10 by means of the warning device 15,
- initiating a curtailed operation mode of the wind turbine 10 with reduced power and/or reduced rotor speed by means of the protection device,
- initiating a restricted operation mode of the wind turbine 10, in which enhancing of power and/or rotor speed is prohibited by means of the protection device,
- initiating a blade pitch angle adjusting mode of the wind turbine 10, in which a blade pitch angle of at least one blade 20 of the wind turbine 10 is changed by means of the protection device,
- initiating an idle operation mode of the wind turbine 10 by means of the protection device,
- initiating a stop operation mode of the wind turbine 10 in order to stop operation of the wind turbine by means of the protection device.

Fig. 5 shows a non-volatile, computer-readable storage medium 18 having stored thereon a computer program product 17. The computer program product 17 comprises instructions to cause the shown system 100 to carry out the described method for controlling the wind turbine 10.

The above description of the accompanying drawings is only by the way of detail and example. Specific features of each aspect of the present invention and the figures can be combined which each other if of technical sense and within the scope of the invention. Further embodiments are possible. For example, the average inclination value can be calculated based on steady-state inclination values established on different days, month or years. The average inclination value can be continuously calculated over days and correspondingly used for a continuously performed steady-state comparison between the average inclination value and a predetermined steady-state reference inclination value. The at least one instantaneous inclination value can be established by measuring at least one inclination value and filtering the at least one measured inclination value with at least one predetermined target frequency.

## Claims

1. A method for controlling a floating wind turbine (10), comprising the steps of:
establishing steady-state inclination values regarding an inclination of the wind turbine (10) by means of an inclination value establishing device (11),
calculating an average inclination value based on at least part of the established steady-state inclination values by means of a calculation device (12),
performing a steady-state comparison between the average inclination value and a predetermined steady-state reference inclination value by means of a comparison device (13), and
initiating steady-state measures based on the comparison between the average inclination value and the predetermined steady-state reference inclination value by means of an initiation device (14).

2. The method according to claim 1, wherein the steady-state comparison is performed between the average inclination value and at least one predetermined steady-state reference inclination value by means of the comparison device (13), wherein at least one of the following steady-state measures is initiated by means of the initiation device (14) depending on the steady-state comparison:
generating a warning signal and outputting the warning signal into the environment of the wind turbine (10) by means of a warning device (15),
initiating a curtailed operation mode of the wind turbine (10) with reduced power and/or reduced rotor speed by means of a protection device,
initiating a restricted operation mode of the wind turbine (10), in which enhancing of power and/or rotor speed is prohibited by means of the protection device,
initiating a blade pitch angle adjusting mode of the wind turbine (10), in which a blade pitch angle of at least one blade (20) of the wind turbine (10) is changed by means of the protection device,
initiating an idle operation mode of the wind turbine (10) by means of the protection device,
initiating a stop operation mode of the wind turbine (10) in order to stop operation of the wind turbine by means of the protection device.

3. The method according to one of the preceding claims, wherein the steady-state comparison is performed between the average inclination value and a predetermined first steady-state reference inclination value by means of the comparison device (13), wherein at least one of the following steady-state measures is initiated by means of the initiation device (14) when the average inclination value is higher than the predetermined first steady-state reference inclination value:
generating a first warning signal and outputting the first warning signal into the environment of the wind turbine (10) by means of a warning device (15),
initiating a curtailed operation mode of the wind turbine (10) with reduced power and/or reduced rotor speed by means of a protection device, and/or
initiating a restricted operation mode of the wind turbine (10), in which enhancing of power and/or rotor speed is prohibited by means of the protection device.

4. The method according to claim 3, wherein the steady-state comparison is performed between the average inclination value and a predetermined second steady-state reference inclination value, which is higher than the first steady-state reference inclination value, by means of the comparison device (13), wherein at least one of the following steady-state measures is initiated by means of the initiation device (14) when the average inclination value is higher than the predetermined second steady-state reference inclination value:
generating a second warning signal, which differs from the first warning signal, and outputting the second warning signal into the environment of the wind turbine (10) by means of the warning device (15), and/or
initiating an idle operation mode of the wind turbine (10) by means of the protection device.

5. The method according to claim 4, wherein the steady-state comparison is performed between the average inclination value and a predetermined third steady-state reference inclination value, which is higher than the second steady-state reference inclination value, by means of the comparison device (13), wherein at least one of the following steady-state measures is initiated by means of the initiation device (14) when the average inclination value is higher than the predetermined third steady-state reference inclination value:
generating a third warning signal, which differs from the first warning signal and the second warning signal, and outputting the third warning signal into the environment of the wind turbine (10) by means of the warning device (15), and/or
initiating a stop operation mode of the wind turbine (10) in order to stop operation of the wind turbine by means of the protection device.

6. The method according to one of the preceding claims, wherein the steady-state comparison is performed multiple times between the average inclination value and a fourth predetermined steady-state reference inclination value by means of the comparison device (13) over time, wherein at least one of the following steady-state measures is initiated by means of the initiation device (14) when the average inclination value differs a predetermined number of occurrences from the predetermined steady-state reference inclination value by a predetermined difference value:
generating a fourth warning signal and outputting the fourth warning signal into the environment of the wind turbine (10) by means of a warning device (15),
generating a service request and outputting the service request into the environment of the wind turbine (10) by means of the warning device (15), and/or
initiating a stop operation mode of the wind turbine (10) in order to stop operation of the wind turbine by means of a protection device.

7. The method according to one of the preceding claims, wherein the average inclination value is calculated based on steady-state inclination values established on different days.

8. The method according to one of the preceding claims, wherein the average inclination value is continuously calculated over days and correspondingly used for a continuously performed steady-state comparison between the average inclination value and a predetermined steady-state reference inclination value.

9. The method according to one of the preceding claims, further comprising the steps of:
establishing at least one instantaneous inclination value regarding an inclination of the wind turbine (10) by means of the inclination value establishing device (11),
performing an instantaneous comparison between the at least one instantaneous inclination value and a predetermined instantaneous reference inclination value by means of the comparison device (13), wherein the predetermined instantaneous reference inclination value is higher than the predetermined steady-state reference inclination value,
initiating instantaneous measures based on the instantaneous comparison between the at least one instantaneous inclination value and the predetermined instantaneous reference inclination value by means of the initiation device (14).

10. The method according to claim 9, wherein the instantaneous comparison is performed between the at least one instantaneous inclination value and the predetermined instantaneous reference inclination value by means of the comparison device (13), wherein at least one of the following instantaneous measures is initiated by means of the initiation device (14) depending on the instantaneous comparison:
generating a warning signal and outputting the warning signal into the environment of the wind turbine (10) by means of the warning device (15),
initiating a curtailed operation mode of the wind turbine (10) with reduced power and/or reduced rotor speed by means of the protection device,
initiating a restricted operation mode of the wind turbine (10), in which enhancing of power and/or rotor speed is prohibited by means of the protection device,
initiating a blade pitch angle adjusting mode of the wind turbine (10), in which a blade pitch angle of at least one blade (20) of the wind turbine (10) is changed by means of the protection device,
initiating an idle operation mode of the wind turbine (10) by means of the protection device,
initiating a stop operation mode of the wind turbine (10) in order to stop operation of the wind turbine by means of the protection device.

11. The method according to one of claims 9 and 10, wherein the at least one instantaneous inclination value is established by measuring at least one inclination value and filtering the at least one measured inclination value with at least one predetermined target frequency.

12. A system (100) for controlling a floating wind turbine (10), comprising:
an inclination value establishing device (11) for establishing steady-state inclination values regarding an inclination of the wind turbine (10),
a calculation device (12) for calculating an average inclination value based on at least part of the established steady-state inclination values,
a comparison device (13) for performing a comparison between the average inclination value and a predetermined steady-state reference inclination value, and
an initiation device (14) for initiating steady-state measures based on the comparison between the average inclination value and the predetermined steady-state reference inclination value, and/or in particular
wherein the system (100) is further configured to carry out the method of at least one of claims 1 - 11, in particular wherein at least partially a controller (60) of the system (100) is configured to carry out the method of at least one of claims 1 - 11.

13. A computer program product (17) comprising instructions to cause the system (100) of claim 12 to carry out the method of claims 1 - 11.

14. A computer-readable storage medium (18) having stored thereon the computer program product (17) of claim 13.

15. A method of operating an offshore wind turbine system, in particular a floating offshore wind turbine system (1), the method comprising:
controlling the floating offshore wind turbine system (1) according to any one of claims 1 to 11; and in particular the method further comprising:
generating, by the offshore wind turbine system, electrical power and/or electrical energy,
transmitting at least a part of the electrical power and/or of the electrical energy to an electrical receiving arrangement not positioned in international waters, in particular positioned on land, onshore; and
supplying at least a part of the electrical power and/or of the electrical energy to a utility grid, in particular onshore utility grid.
